# EUROPEAN PATENT APPLICATION

(11) **EP 4 445 864 A1**
(43) Date of publication of application: **16.10.2024**
(21) Application number: 22903058.0
(22) Date of filing: 27.10.2022
(51) Int. Cl.: A61C 7/34, A61C 7/28, A61C 7/10

(54) **ORTHODONTIC APPLIANCE AND ORTHODONTIC SYSTEM**

(30) Priority: 06.12.2021 CN 202111477774
(71) Applicant: Guangzhou OO Medical Scientific Limited, Guangzhou, Guangdong 510000 (CN)
(72) Inventor: XU, Zien, Guangzhou, Guangdong 510000 (CN); YU, Jianwen, Guangzhou, Guangdong 510000 (CN); ZHOGN, Tingjin, Guangzhou, Guangdong 510000 (CN); JI, Li, guangzhou, Guangdong 510000 (CN)
(74) Representative: Michalski Hüttermann & Partner Patentanwälte mbB
(86) International application number: PCT/CN2022/127838
(87) International publication number: WO 2023/103634

(57) **Abstract**

An orthodontic appliance and an orthodontic system. The orthodontic appliance comprises a body portion (110), and a traction component (170), a transmission component (150) and an occupying component (160) which are independently provided, the body portion (110) is provided with a slot (140) and an open accommodating cavity (113) communicated with the slot (140), and the traction component (170) is detachably connected to the accommodating cavity (113) and/or the transmission component (150); the accommodating cavity (113) accommodates the transmission component (150), the occupying component (160) is provided in the slot (140) or is provided in the accommodating cavity (113) and the slot (140), and the transmission component (150) is transmittingly connected to the occupying component (160); the transmission component (150) is provided with a transmission adaptation position (151) configured to be transmittingly connected to a screwing tool, and the transmission component (150) drives the occupying component (160) to at least partially enter or exit the slot (140) or move in the slot (140) in a slot width direction, so as to change an effective space of the slot (140). A traction function and an occupying function for the slot (140) are split without affecting each other, and the functions can be implemented at the same time or not implemented at the same time. The occupying component (160) can achieve a locking function, and can adjust the depth of the occupying component (160) in the slot (140), thereby adjusting a movement space of an archwire (201) in the slot (140), and controlling a torque of the archwire (201).

## Description

### Technical Field

The invention relates to the field of orthodontic technology, and particularly relates to an orthodontic appliance and an orthodontic system.

### Related Art

The orthodontic appliance includes the orthodontic bracket and the buccal tube, the appliance is an important component of fixed orthodontic technology and the appliance used to correct tooth alignment malformations. The appliance is directly fixed on the surface of the crown, the archwire passes through the bracket to perform various types of correction force on the teeth to achieve the purpose of orthodontics.

The applicant filed an invention application on January 29, 2015, titled Traction Bracket, Orthodontic System, And Orthodontic Method Thereof, and the patent number is 201510046931.X.

This patent discloses a traction element, which includes a locking bolt and a traction bolt. The difference between the locking bolt and the traction bolt is that the end of the locking bolt protrudes. When the locking bolt engages the locking traction hole of the main body portion, the end of the locking bolt may enter the main trench to lock the archwire, when the traction bolt engages the locking traction hole of the main body portion, the end of the traction bolt does not enter the main trench, does not produce a locking effect on the archwire, and is only used for traction.

This bracket may implement a traction locking system: the bracket with the locking bolt is an active bracket, and the bracket with the traction bolt is a passive bracket. Two ends of the rubber band are hung on the locking bolt and the traction bolt respectively, and the elastic contraction of the rubber band acts on the locking bolt and the traction bolt. Due to the high friction between the locking bolt and the archwire, the active bracket pulls the passive bracket, and the bracket with the traction bolt drives the teeth closer to the teeth where the bracket with the locking bolt is located, thereby achieving staged correction of misaligned teeth.

In order to realize any switching between active and passive brackets, the locking bolt has to have a traction function. However, this traction locking system cannot solve the situation where only locking is required without traction. When only locking is required, the bolt head of the locking bolt continues to protrude, causing significant discomfort to the patient. Also, a series of oral health problems caused by the traction bolt are generated, such as hanging food residue to breed bacteria, and abrading the oral mucosa to induce ulcers.

### SUMMARY

In view of the above technical problems, the invention provides a multi-function adjustable orthodontic appliance and an orthodontic system.

The technical solution adopted by this invention to solve this technical problem is:
An orthodontic appliance, which includes a main body portion and a traction component, a transmission component, and a position occupying component disposed independently of each other, the main body portion is disposed with a trench and an open containing cavity connected to the trench, the traction component is detachably connected to the containing cavity and/or the transmission component; the containing cavity accommodates the transmission component, the position occupying component is disposed in the trench or disposed in the containing cavity and the trench, and the transmission component is linkagedly connected to the position occupying component; the transmission component is disposed with a transmission fitting position, which is used to linkagedly connect a screwing tool, the transmission component drives the position occupying component to at least partially enter or exit the trench or move in the trench along a trench width direction to change an effective space of the trench.

In an embodiment, the traction component is detachably connected to the containing cavity through snap-fitting, screwing, or interference-fitting, and/or, the traction component is detachably connected to the transmission component through snap-fitting or interference-fitting.

In an embodiment, the containing cavity is disposed with a limiting structure, so that the transmission component rotates in the containing cavity but does not move axially; the position occupying component is limited by the containing cavity and/or the trench and does not rotate.

In an embodiment, the containing cavity penetrates through surfaces of the trench and the main body portion, and the opening of the containing cavity is disposed on a gingival surface of the main body portion.

In an embodiment, the transmission component is a screw rod or a threaded bushing, and the screw rod or the threaded bushing is linkagedly connected to the position occupying component by screw connection.

In an embodiment, the position occupying component comprises a moving member, the moving member is provided with an internal thread, and correspondingly, an end of the screw rod or an outer wall of the threaded bushing is provided with an external thread.

In an embodiment, the transmission fitting position is a gear, a non-circular protrusion, or a non-circular hole.

The trench divides the main body portion into two working wings, the containing cavity is disposed on any one of the working wings or penetrates the trench to be disposed on the two working wings; the transmission component and the position occupying component are disposed on the same working wing, or the transmission component and the position occupying component are disposed on different working wings.

In an embodiment, a bottom plate is further provided, and the bottom plate is disposed on a bottom surface of the main body portion; a cover body portion is further provided, and the cover body portion is disposed on a surface of the main body portion.

An orthodontic system includes an archwire and at least one orthodontic appliance as described in any one of the above embodiments, and the archwire is accommodated in the trench of the orthodontic appliance.

Compared with existing technology, the positive effects are as follows:
1. This invention separates the traction function and the trench positioning function without affecting each other, the functions may be implemented freely and independently, and the functions may be implemented simultaneously or not implemented simultaneously. This invention can reproduce the traction locking system of the related patent, and can also achieve the position occupying function independently. When the position occupying function is implemented independently, the traction component is detached, and then the traction component does not protrude to cause problems such as discomfort, uncleanness, and unhygienic. The screwing tool engages with the position occupying component through the transmission component, avoiding direct engagement with the position occupying component and reducing the engaging level of the screwing tool, which facilitates the operation for the doctor. The transmission component and the position occupying component are both disposed at the main body portion, and the transmission component is stably engaged with the position occupying component to ensure accurate transmission.
2. This invention redefines the locking function. The purpose of the related art locking bolt entering the trench is to abut against the archwire and perform static friction against the archwire, while the position occupying component of the invention has more possibilities. The position occupying component of the invention can not only realize the locking function, but also adjust the depth of the position occupying component in the trench, that is, the position occupying component only occupies a certain position in the trench, thereby adjusting the activity space of the archwire in the trench, controlling the torque of the archwire effectively, and reducing the number of archwire replacements, then, the torque can be expressed relatively coherently, softly, and accurately, and significant correction effect is achieved, the operating time of the doctor is reduced, the work efficiency is improved, and the mental and financial burdens of the patient are reduced.

The invention will be further described below together with the accompanying drawings and Examples.

### BRIEF DESCRIPTION OF DRAWINGS

FIG. 1 is a schematic structural view of a bracket in a first state in Example 1;
FIG. 2 is a side view in FIG. 1;
FIG. 3 is a cross-sectional view along a line A-A in FIG. 2;
FIG. 4 is a schematic structural view of the bracket in a second state in Example 1;
FIG. 5 is a cross-sectional view of the bracket in a third state in Example 1;
FIG. 6 is a schematic structural view of the bracket in a fourth state in Example 1;
FIG. 7 is an exploded schematic view of a transmission component and a position occupying component in Example 1;
FIG. 8 is an exploded schematic view of a traction component and a main body portion in Example 1;
FIG. 9 is a schematic structural view of the bracket in the first state in Example 2;
FIG. 10 is a top view of FIG. 9;
FIG. 11 is a side view of FIG. 9;
FIG. 12 is a cross-sectional view of FIG. 9;
FIG. 13 is another cross-sectional view of FIG. 9;
FIG. 14 is a top view of the bracket in the second state in Example 2;
FIG. 15 is a cross-sectional view of FIG. 14;
FIG. 16 is a side view of the bracket in the third state in Example 2;
FIG. 17 is a cross-sectional view of FIG. 16;
FIG. 18 is another cross-sectional view of FIG. 16;
FIG. 19 is a cross-sectional view of the bracket in the fourth state in Example 2;
FIG. 20 is an exploded schematic view of the traction component, a threaded bushing, a moving member, and a track path in Example 2.

### Reference Signs List

101. bracket; 110. main body portion; 120. cover body portion; 130. bottom plate; 140. trench; 111. first working wing; 112. second working wing; 201. archwire; 150. transmission component; 160. position occupying component; 170. traction component; 113. containing cavity; 114. annular groove; 151. transmission fitting position; 152. flange; 161. moving member; 162. clamping arm; 171. traction end; 172. engaging end;
102. bracket; 210. main body portion; 220. cover body portion; 230. bottom plate; 240. trench; 211. first working wing; 212. second working wing; 202. archwire; 250. transmission component; 260. position occupying component; 270. traction component; 213. containing cavity; 214. quasicircular groove; 251. transmission fitting position; 252. second transmission fitting position; 253. third transmission fitting position; 261. moving member; 262. sliding track; 271. traction end; 272. engaging end; 241. track path.

### DESCRIPTION OF EMBODIMENTS

It should be noted that the orthodontic appliance mentioned in this invention refers to an orthodontic bracket or a buccal tube, or other appliances with similar functions and similar structures.

Unless otherwise stated, in the following structural description, the reference system of the maxillary teeth needs to be used to describe embodiments of the invention. Therefore, as used herein, the terms used to describe the orthodontic appliance such as labial side, lingual side, mesial, distal, occlusal, and gingival are relative to the selected reference system. However, embodiments of the invention are not limited to the selected reference system and the terms described, as the orthodontic appliance may be used on other teeth within the oral cavity and in other directions.

For example, the bracket or the buccal tube may also be coupled to the lingual surface of the tooth and fall within the scope of the invention. Persons skilled in the art are aware that the descriptive terms used herein may not be directly applicable when there are changes in the reference system. However, embodiments of the invention are intended to be independent of position and direction within the oral cavity and the relevant terms used to describe the embodiments are merely to provide a clear description of the embodiments in the drawings. Likewise, the related terms such as labial side, lingual side, mesial, distal, occlusal, and gingival do not limit the invention to a particular position or direction.

The related terms labial side, lingual side, mesial, distal, occlusal, and gingival are industry terms for orthodontic treatment. Taking one maxillary tooth as an example, the surface of the tooth may be roughly divided into six surfaces. The surface of the tooth occupying the mandibular teeth is the occlusal surface; the surface of the tooth connected to the attached gum tissue is the gingival surface; the occlusal surface and the gingival surface are opposite, and the direction formed by the occlusal surface and the gingival surface is also called the gingival and jaw direction. The surface of the tooth facing the lip is the labial side surface, and the surface of the tooth facing the tongue is the lingual side surface. The labial side surface and the lingual side surface are opposite, and the direction formed by the labial side surface and the lingual side surface is also called the labiolingual direction. The two surfaces of the tooth in contact with the adjacent teeth are the mesial surface and the distal surface, in which the difference lies in the distance from the middle part, and the direction formed by the two surfaces is also called the mesiodistal direction, or the mesiodistal direction.

And in the description of direction, such as the labiolingual direction, the description generally refers to both directions. However, the labial-lingual direction, for example, specifically refers to a single direction, that is, the direction from the labial side surface to the lingual side surface, and the description is used as a distinction.

### Example 1

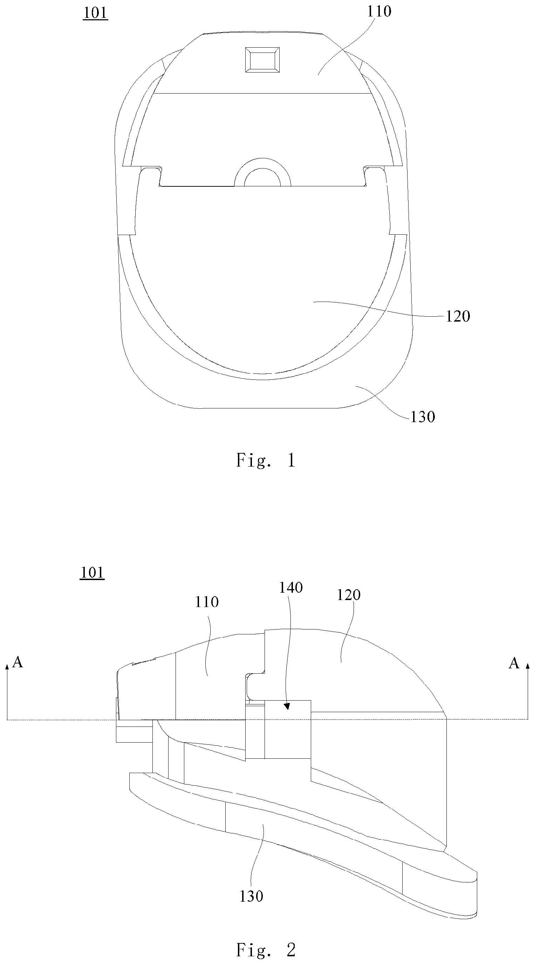

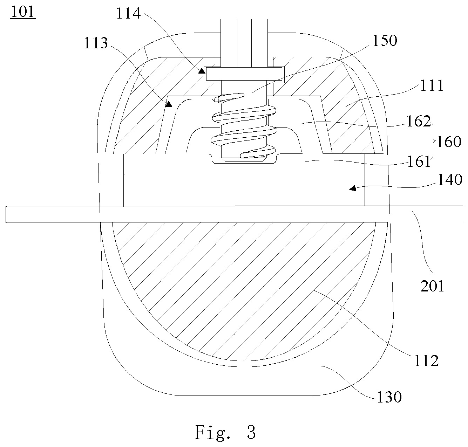

As shown in FIG. 1 to FIG. 8, a bracket 101 in Example 1 includes a main body portion 110, a cover body portion 120, and a bottom plate 130. The main body portion 110 is disposed with a trench 140 penetrating two sides of the main body portion 110 in the mesiodistal direction. The trench 140 divides the main body portion 110 into two components, including a first working wing 111 and a second working wing 112. The trench 140 is used to accommodate an archwire. The trench 140 has two opposite side walls and a bottom wall, with an upper opening.

The bottom plate 130 is connected to the bottom surface of the main body portion 110, and the bottom plate 130 is used to bond the bracket 101 to the tooth surface.

The cover body portion 120 is connected to the surface of the main body portion 110 and is used to open or close the trench 140. In this embodiment, preferably, the cover body portion 120 is slidably connected to the labial side surface of the second working wing 112.

For the invention, the bottom plate 130 and the cover body portion 120 are optional components. As a preferred embodiment, the two components are disposed.

In the invention, the bracket 101 is further disposed with a transmission component 150, a position occupying component 160, and a traction component 170. The transmission component 150, the position occupying component 160, and the traction component 170 are independent components and are not fixedly connected to one another. The main body portion 110 is disposed with an open containing cavity 113 connected to the trench 140. The containing cavity 113 accommodates the transmission component 150. The transmission component 150 is linkagely connected to the position occupying component 160. The position occupying component 160 is accommodated in the containing cavity 113 and the trench 140, and the position occupying component 160 is limited by the containing cavity 113 and/or the trench 140 and cannot rotate. The traction component 170 is detachably connected to the containing cavity 113. The transmission component 150 is disposed with a transmission fitting position 151, which is used to linkagedly connect a screwing tool. The transmission component 150 drives the position occupying component 160 to at least partially enter or exit the trench 140 or move in the trench 140 along a trench width direction to change an effective space of the trench 140.

Specifically, the containing cavity 113 is disposed at the first working wing 111 of the main body portion 110. The containing cavity 113 penetrates the surface of the main body portion 110 and the trench 140 in the gingival and jaw direction. The opening of the containing cavity 113 is disposed on the gingival surface of the main body portion 110. The containing cavity 113 is disposed with a limiting structure, so that the transmission component 150 rotates in the containing cavity 113 but cannot move axially. Specifically, the limiting structure is an annular groove 114 disposed on the inner wall of the containing cavity 113 for limiting.

Specifically, the transmission component 150 is a screw rod, and an end thereof is disposed with a transmission fitting position 151 for matching a screwing tool. The transmission fitting position 151 is a square protrusion. Correspondingly, the engaging end 172 of the screwing tool is a square hole. Another other end of the transmission component 150 is provided with an external thread. The middle of the transmission component 150 is disposed with a flange 152. The flange 152 is located between the external thread and the transmission fitting position 151. The transmission component 150 is accommodated in the containing cavity 113. An end of the transmission component 150 with the transmission fitting position 151 corresponds to the opening of the containing cavity 113. The threaded end of the transmission component 150 faces the trench 140, and the transmission component 150 is substantially perpendicular to the trench 140. The flange 152 and the annular groove are matchingly connected to limit the transmission component 150 in the containing cavity 113 to only rotate around the gingival and jaw direction as the axis but not to move significantly axially.

The position occupying component 160 includes a moving member 161 disposed in the trench 140. The moving member 161 is formed in a plate shape or a block shape, and two opposite plate surfaces thereof correspond to the two side walls of the trench 140 respectively. The surface facing the containing cavity 113 is a connection surface of the moving member 161, and the other surface is a functional surface of the moving member 161. The connection surface of the moving member 161 is disposed with a pair of clamping arms 162. The clamping arms 162 may move in the trench 140 along with the moving member 161, and may also reach deep into the containing cavity 113. A receiving cavity able to receive the threaded end of the transmission component 150 is formed between the clamping arms 162, and opposite surfaces of the clamping arms 162 are respectively provided with internal threads. The clamping arm 162 matches with the threaded end of the transmission component 150, so that the transmission component 150 is linkagedly connected to the position occupying component 160. The bottom edge of the moving member 161 in this embodiment abuts the bottom wall of the trench 140, so that the moving member 161 cannot rotate along with the transmission component 150, which forces the moving member 161 to convert rotation into movement to realize the position occupying function of the position occupying component 160.

The traction component 170 is a bolt body, and an end thereof radially protrudes to form a bolt head, which is a traction end 171; another end of the traction component 170 is recessed to form the shape of a sleeve, which is the engaging end 172, detachably disposed in the containing cavity 113 in a plugging manner. Specifically, the side wall of the engaging end 172 has a blind groove axially opened from the opening, and along the outer wall of the opening edge of the groove is disposed with a bump to form the elastic buckle. Correspondingly, the inner wall of the containing cavity 113 is partially recessed to form a buckle position.

### Working Principle of Example 1:

Referring to FIG. 1 to FIG. 3, in a first state, the connection surface of the moving member 161 is closely attached to the side wall of the trench 140 connecting the containing cavity 113, and the effective space of the trench 140 is the largest. The traction component 170 is detached from the main body portion 110. For the bracket 101 in the first state, neither the traction function nor the position occupying function is applied.

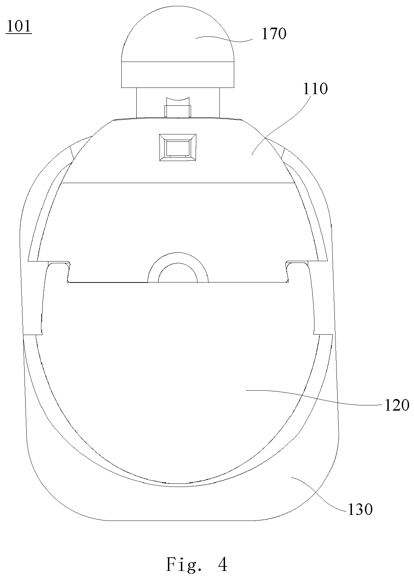

Referring to FIG. 4, in a second state, based on the first state, the traction component 170 is engaged. Specifically, the engaging end 172 of the traction component 170 is engaged with the opening of the containing cavity 113, the elastic buckle of the traction component 170 is engaged with the buckle position of the containing cavity 113, the traction end 171 of the traction component 170 is located above the main body portion 110, and the traction function may be performed.

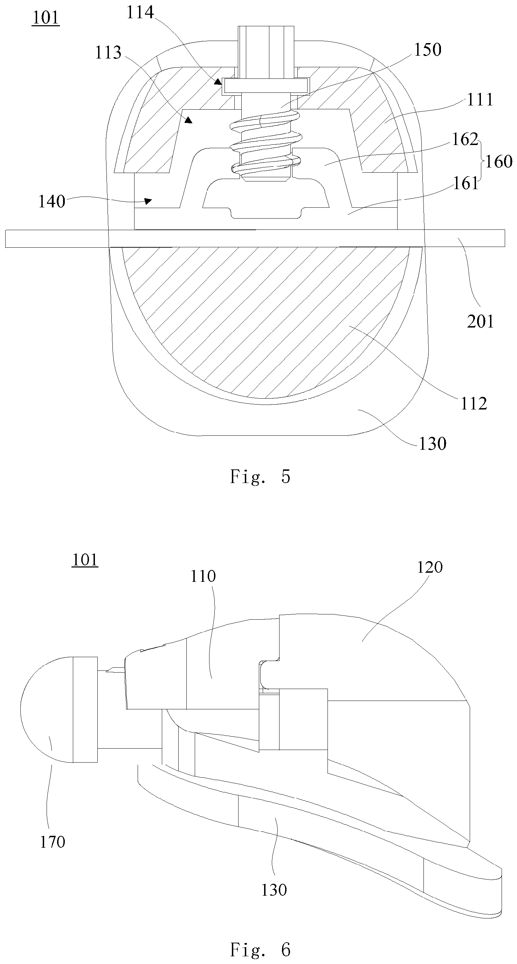

Referring to FIG. 5, in a third state, based on the second state, the effective space of the trench 140 is adjusted, and the position occupying function is implemented. Specifically, the engaging end of the screwing tool is engaged with the transmission fitting position 151 of the transmission component 150. The transmission component 150 is rotated forward or reverse, and the threaded end of the transmission component 150 reaches deep into or slightly exit the receiving cavity of the position occupying component 160. Since the containing cavity 113 limits the axial movement of the transmission component 150, and at the same time, the position occupying component 160 is limited from rotating and the rotation is passively converted into movement, so that the position occupying component 160 moves in the trench 140 along a trench width direction. For example: forward rotation of the screwing tool may allow the transmission component 150 to drive the position occupying component 160 closer to the second working wing 112, and the effective space of the trench 140 becomes smaller; reverse rotation of the screwing tool may allow the transmission component 150 to drive the position occupying component 160 away from the second working wing 112, and the effective space of the trench 140 becomes larger. When the screwing tool is plugged out, the effective space of the trench 140 is re-determined.

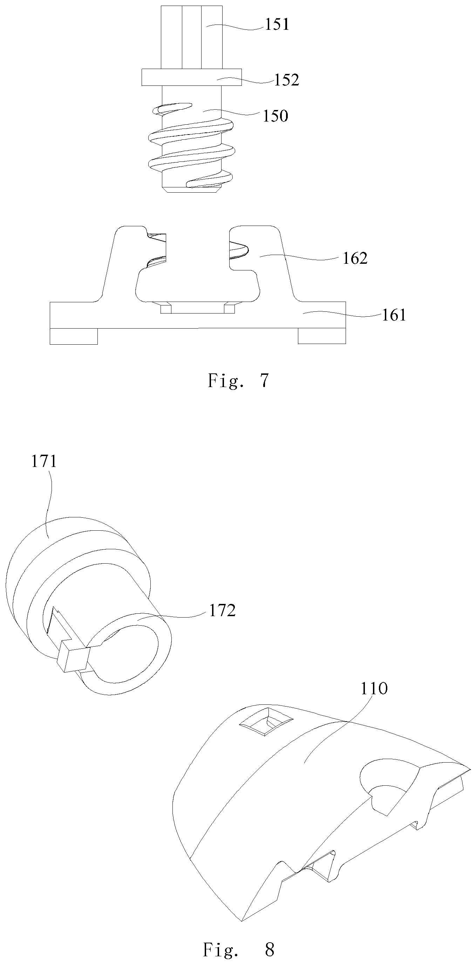

Referring to FIG. 7, in a fourth state, based on the third state, the traction component 170 is engaged. Specifically, the engaging end 172 of the traction component 170 is engaged with the opening of the containing cavity 113, the elastic buckle of the traction component 170 is engaged with the buckle position of the containing cavity 113, the traction end 171 of the traction component 170 is located above the main body portion 110, and the traction function may be performed.

The first state, the second state, the third state, and the fourth state may be switched freely, and there is no strict transformation order between the four states.

It should be noted that the trench 140 is disposed with the two opposite side walls, and the total accommodation space of the trench 140 is between the two opposite side walls. In the invention, the position occupying component 160 is disposed in the trench 140 to re-divide the space in the trench 140. In some cases, as the position occupying component 160 moves in the trench 140, the total accommodation space of the trench 140 remains unchanged, and the position occupying component 160 only axially divides the trench 140 into two spaces. However, generally, only one of the two spaces may be used to store an archwire 201. Then, the space formed by the functional surface of the position occupying component 160 and the side wall of the trench 140, which may be used to store the archwire 201, is the effective space of the trench 140 as defined by the invention. Therefore, as the position occupying component 160 changes the position or shape thereof in the trench 140, the total accommodation space of the trench 140 may not change, but the effective space of the trench 140 shall change. The real-time size of the effective space is based on the radial size of the largest archwire 201 that may be stored in the space at the moment. The understanding of the effective space of the trench 140 is the same as in other embodiments of the invention, so detailed will not be repeated below.

Compared with the related art, Example 1 can reproduce the traction locking system of the related patent, and can also achieve the position occupying function independently. Example 1 structurally separates the traction component 170 and the position occupying component 160, and introduces the transmission component 150, so that the traction function and the position occupying function of the trench 140 are separated without affecting each other, the functions may be implemented freely and independently, and the functions may be implemented simultaneously or not implemented simultaneously. The traction component 170 may be disposed at the main body portion 110 to achieve traction, or may be detached from the main body portion 110 so that the traction function is disabled. The transmission component 150 in Example 1 is a screw rod, which does not protrude significantly from the main body portion 110. After the traction component 170 is detached, there are no significant protruding foreign objects on the surface of the bracket 101, and this arrangement does not cause issues such as discomfort, uncleanness, and unhygienic to the patient. The position occupying component 160 may limit the position of the archwire 201 or even lock the archwire 201, and may also be closely attached to the side wall of the trench 140 to allow the maximum effective space. The position occupying component 160 may adjust the space of the trench 140, so as to meet the needs of different treatment stages.

### Example 2

Example 2 is an orthodontic system, which includes an archwire 201 and at least one bracket 101 in Example 1, and the bracket 101 is accommodated in the trench 140 of the bracket 101.

### Example 3

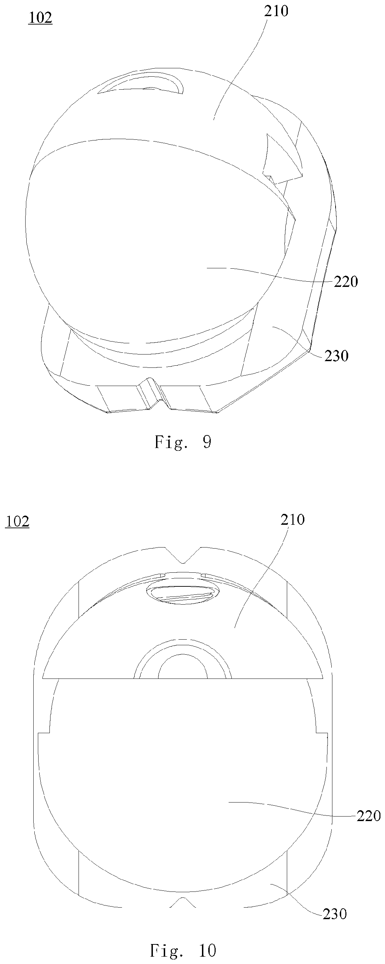

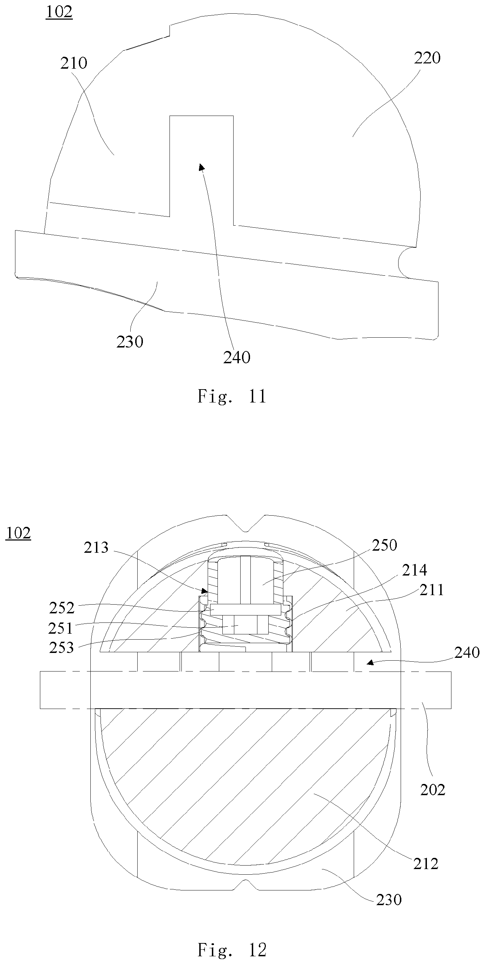

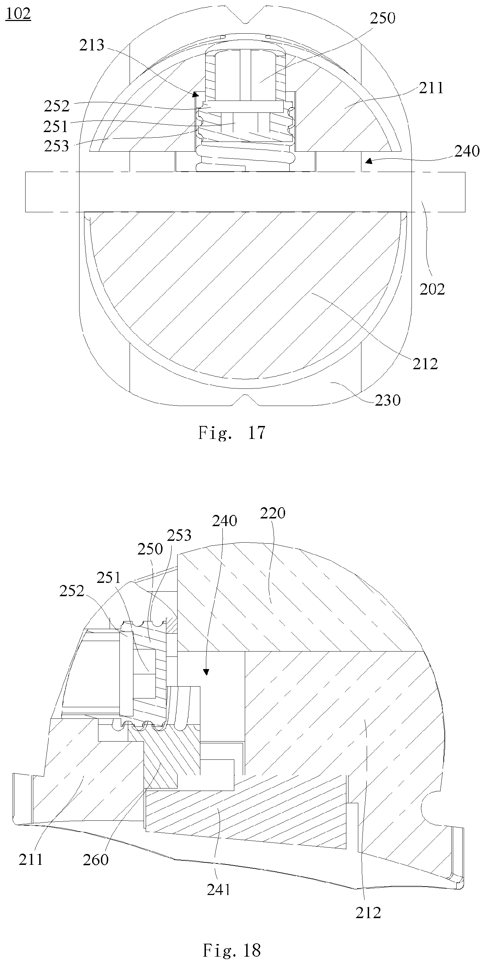

As shown in FIG. 9 to FIG. 20, a bracket 102 in Example 3 includes a main body portion 210, a cover body portion 220, and a bottom plate 230. The main body portion 210 is disposed with a trench 240 penetrating two sides of the main body portion 210 in the mesiodistal direction. The trench 240 divides the main body portion 210 into two components, including a first working wing 211 and a second working wing 212. The trench 240 is used to accommodate an archwire 202. The trench 240 has two opposite side walls and a bottom wall, with an upper opening.

The bottom plate 230 is connected to the bottom surface of the main body portion 210, and the bottom plate 230 is used to bond the bracket 102 to the tooth surface.

The cover body portion 220 is connected to the surface of the main body portion 210 and is used to open or close the trench 240. In this embodiment, preferably, the cover body portion 220 is slidably connected to the labial side surface of the second working wing 212.

For the invention, the bottom plate 230 and the cover body portion 220 are optional components. As a preferred embodiment, the two components are disposed.

In the invention, the bracket 102 is further disposed with a transmission component 250, a position occupying component 260, and a traction component 270. The transmission component 250, the position occupying component 260, and the traction component 270 are independent components and are not fixedly connected to one another. The main body portion 210 is disposed with an open containing cavity 213 connected to the trench 240. The containing cavity 213 accommodates the transmission component 250. The transmission component 250 is linkagely connected to the position occupying component 260. The position occupying component 260 is accommodated in the containing cavity 213 and the trench 240, and the position occupying component 260 is limited by the containing cavity 213 and/or the trench 240 and cannot rotate. The traction component 270 is detachably connected to the transmission component 250. The transmission component 250 is disposed with a transmission fitting position 251, which is used to linkagely connect a screwing tool. The transmission component 250 drives the position occupying component 260 to at least partially enter or exit the trench 240 or move in the trench 240 along a trench width direction to change an effective space of the trench 240.

Specifically, the containing cavity 213 is disposed at the first working wing 211 of the main body portion 210. The containing cavity 213 penetrates the surface of the main body portion 210 and the trench 240 in the gingival and jaw direction. The opening of the containing cavity 213 is disposed on the gingival surface of the main body portion 210. The containing cavity 213 is provided with a limiting structure, so that the transmission component 250 rotates in the containing cavity 213 but cannot move axially. Specifically, the limiting structure is a quasicircular groove 214 disposed on the inner wall of the containing cavity 213.

Specifically, the transmission component 250 is a threaded bushing, which may be penetrated at two ends, or may be open at only one end. In this embodiment, preferably, the threaded bushing is in the shape of a sleeve with one end open and the other end closed. The threaded bushing is accommodated in the containing cavity 213, in which the open end of the threaded bushing corresponds to the opening of the containing cavity 213, the closed end faces the trench 240, and the central axis of the threaded bushing is basically perpendicular to the trench 240. The threaded bushing is disposed with a transmission fitting position 251, a second transmission fitting position 252, and a third transmission fitting position 253. The transmission fitting position 251 is used to engage with the screwing tool, the second transmission fitting position 252 is used to engage with the traction component 270, and the third transmission fitting position 253 is used to engage with the position occupying component 260.

Specifically, the threaded bushing is disposed with an annular groove, an internal hexagonal hole, and an external thread. The annular groove is disposed on the inner wall of the threaded bushing close to the open end, which is the second transmission fitting position 252 and is engaged with the traction component 270. In this embodiment, the cross section of the inner wall of the threaded bushing is a non-perfect circle, and a shape thereof matches the outer contour of the maximum cross section of the traction component 270 engaged to accommodate the engagement of the traction component 270, and the traction component 270 is snap-fitted with the annular groove by rotating the traction component 270 to a certain angle. The internal hexagonal hole is disposed on the inner wall of the threaded bushing close to the closed end, which is the transmission fitting position 251 and is engaged with the engaging end 272 of the screwing tool. The external thread is provided on the outer wall of the threaded bushing close to the closed end, which is the third transmission fitting position 253 and is threaded to the position occupying component 260. The external thread is embedded in the quasicircular groove to limit the threaded bushing in the containing cavity 213 to only rotate around the gingival and jaw direction as the axis but not to move significantly axially.

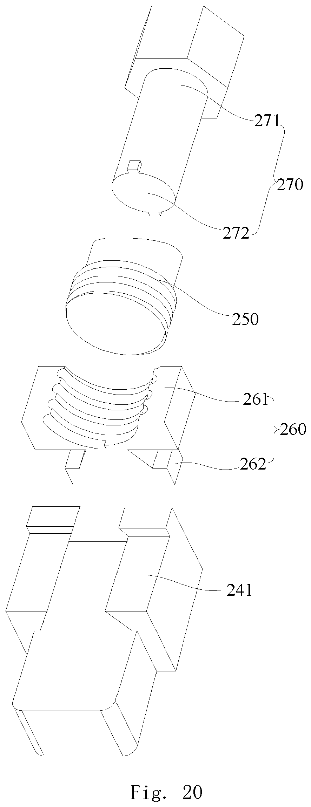

Referring to FIG. 20, the position occupying component 260 includes a moving member 261 disposed in the trench 240 and the containing cavity 213. The moving member 261 is formed in a block shape, and the functional surface of the moving member 261 corresponds to the side wall of the trench 240 close to the second working wing 212. A surface of the moving member 261 corresponding to the cover body portion 220 is recessed to form an internal thread, which matches the external thread of the threaded bushing. The moving member 261 is disposed with a sliding track 262, and the sliding track 262 is connected to a surface of the moving member 261 corresponding to the bottom wall of the trench 240.

The traction component 270 is a bolt body, and an end thereof radially protrudes to form a bolt head, which is a traction end 271; another end of the traction component 270 is disposed with a flange, which is an engaging end 272, and the outer side wall thereof is disposed with two snap-fitting protrusions opposite to each other. The snap-fitting protrusions of the traction component 270 match with the annular groove of the threaded bushing, so that the traction component 270 is detachably connected to the threaded bushing.

In addition, the bottom wall of the trench 240 is disposed with a track path 241 along the trench width direction. The sliding track 262 of the position occupying component 260 matches and engages with the track path 241 of the trench 240, so that the position occupying component 260 may move smoothly in the trench width direction. The sliding track 262 of the position occupying component 260 in this embodiment is connected to the track path 241 of the trench 240, so that the moving member 261 cannot rotate along with the transmission component 250, which forces the moving member 261 to convert rotation into movement to realize the position occupying function of the position occupying component 260.

### Working Principle of Example 3:

Referring to FIG. 9 to FIG. 13, in the first state, the position occupying component 260 is in the containing cavity 213 but does not enter the trench 240, and the effective space of the trench 240 is the largest. The traction component 270 is detached from the main body portion 210. For the bracket 102 in the first state, neither the traction function nor the position occupying function is applied.

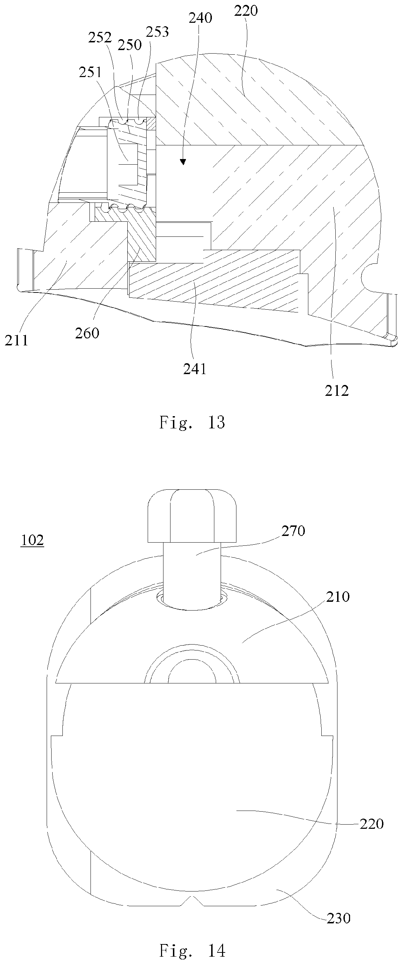

Referring to FIG. 14 to FIG. 15, in the second state, based on the first state, the traction component 270 is engaged. Specifically, the engaging end 272 of the traction component 270 is engaged with the threaded bushing, the traction end 271 of the traction component 270 is located above the main body portion 210, and the traction function may be performed.

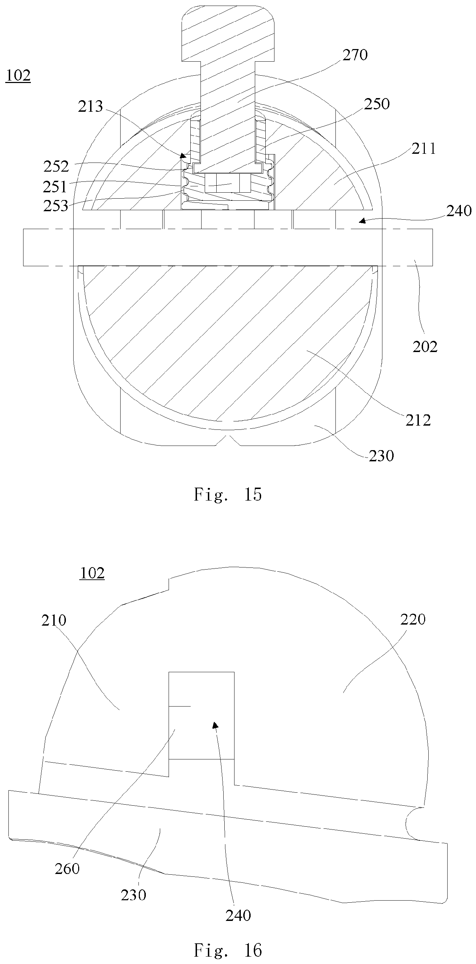

Referring to FIG. 16 to FIG. 18, in the third state, based on the first state, the effective space of the trench 240 is adjusted, and the position occupying function is implemented. Specifically, the engaging end 272 of the screwing tool engages with the internal hexagonal hole of the threaded bushing. The threaded bushing is rotated forward or reverse, and the degree of engagement between the external thread section of the threaded bushing and the moving member 261 may be changed. Since the containing cavity 213 limits the axial movement of the transmission component 250, and at the same time, the position occupying component 260 is limited from rotating and the rotation is passively converted into movement, so that the position occupying component 260 moves in the trench width direction. For example, forward rotation of the screwing tool may allow the transmission component 250 to drive the position occupying component 260 closer to the second working wing 212, and the effective space of the trench 240 becomes smaller; reverse rotation of the screwing tool may allow the transmission component 250 to drive the position occupying component 260 away from the second working wing 212, and the effective space of the trench 240 becomes larger. When the screwing tool is plugged out, the effective space of trench 240 is re-determined.

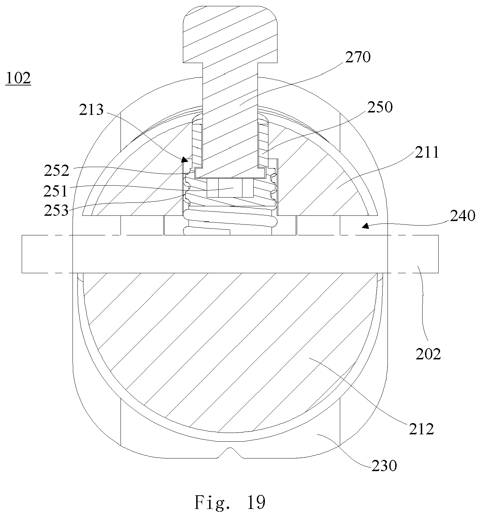

Referring to FIG. 19, in the fourth state, based on the third state, the traction component 270 is engaged. Specifically, the engaging end 272 of the traction component 270 is engaged with the threaded bushing, the traction end 271 of the traction component 270 is located above the main body portion 210, and the traction function may be performed.

The first state, the second state, the third state, and the fourth state may be switched freely, and there is no strict transformation order between the four states.

Compared with the related art, Example 3 can reproduce the traction locking system of the related patent, and can also achieve the position occupying function independently. Example 3 structurally separates the traction component 270 and the position occupying component 260, and introduces the transmission component 250, so that the traction function and the position occupying function of the trench 240 are separated without affecting each other, the functions may be implemented freely and independently, and the functions may be implemented simultaneously or not implemented simultaneously. The traction component 270 may be disposed at the main body portion 210 to achieve traction, or may be detached from the main body portion 210 so that the traction function is disabled. The transmission component 250 in Example 3 is a threaded bushing, which is completely hidden in the containing cavity 213 of the main body portion 210. After the traction component 270 is detached, there are no significant protruding foreign objects on the surface of the bracket 102, the external structure is round and simple, and this arrangement does not cause issues such as discomfort, uncleanness, and unhygienic to the patient. The position occupying component 260 of the main body portion 210 may limit the position of the archwire 202or even lock the archwire 202, and may also be closely attached to the side wall of the trench 240 to allow the maximum effective space. The position occupying component 260 may adjust the space of the trench 240, so as to meet the needs of different treatment stages.

In Example 3, the moving member 261 and the sliding track 262 are integrally formed. In other embodiments, the moving member 261 and the sliding track 262 are not integrally formed, and the moving member 261 and the sliding track 262 are connected by welding, snap-fitting, screwing, interference-fitting, or other methods.

In other embodiments, the transmission fitting position 251 for engaging with the screwing tool is disposed on the inner wall of the threaded bushing close to the open end; or, the transmission fitting position 251 is disposed on the outer wall of the threaded bushing close to the open end.

In other embodiments, the second transmission fitting position 252 for engaging with the traction component 270 is disposed on the inner wall of the threaded bushing close to the closed end; or, the second transmission fitting position 252 is disposed on the outer wall of the threaded bushing close to the open end.

In other embodiments, when the engaging end 272 of the traction component 270 is the same shape as the engaging end 272 of the screwing tool, the transmission fitting position 251 and the second transmission fitting position 252 of the transmission component 250 may be combined into one component.

In other embodiments, the third transmission fitting position 253 for engaging with the position occupying component 260 is an internal thread and is provided on the inner wall of the threaded bushing close to the closed end. Specifically, the threaded bushing is tubular with both ends open, and an end of the threaded bushing corresponding to the position occupying component 260 is provided with an internal thread. Correspondingly, the moving member 261 is formed in a block shape, and a surface of the moving member corresponding to the threaded bushing is disposed with a screw rod penetrating the threaded bushing. The screw rod matches with the threaded bushing, the moving member 261 is limited by the sliding track 262 and cannot rotate, while the threaded bushing may only rotate around the central axis thereof and cannot move axially, so that when the threaded bushing is driven to rotate, the screw rod reaches deep into or slightly exits the threaded bushing, thereby the moving member 261 is driven to move in the trench 240.

### Example 4

Example 4 is an orthodontic system, which includes an archwire 202 and at least one bracket 102 in Example 3, and the bracket 102 is accommodated in the trench 240 of the bracket 102.

Regarding the connection relationship of the traction component, it may be seen from the above embodiments that the traction component may be detachably connected to the containing cavity, as in Example 1; the traction component may also be detachably connected to the transmission component, as in Example 3. In other embodiments, the traction component may also be detachably connected to both the containing cavity and the transmission component. When the traction component is disposed on the main body portion and the traction end is above the main body portion, then the traction component is in a working state; otherwise, the traction component is in a non-working state.

Regarding the connection manner of the traction component, the detachable connection methods include snap-fitting, interference-fitting, and screw connection. Snap-fitting further includes engagement between the elastic buckle and the buckle position, fastening between the snapping protrusion and the buckle position, and the engagement between the annular groove and the flange. For example: the outer wall of the engaging end of the traction component is disposed with a hemispherical protrusion, and correspondingly, the inner wall of the containing cavity or the inner wall of the transmission component is recessed with a hemispherical buckle position, or the positions of the protrusion and the buckle position may be interchanged; alternatively, the outer wall of the engaging end of the traction component is disposed with the elastic buckle, and correspondingly, the inner wall of the containing cavity or the inner wall of the transmission component is recessed to form a buckle position, or the positions of the elastic buckle and the buckle position may be interchanged; alternatively, the traction component is interference-fitted with the containing cavity, or the traction component is interference-fitted with the transmission component; alternatively, the engaging end of the traction component is provided with the external thread, and correspondingly, the inner wall of the containing cavity is provided with the internal thread; alternatively, the traction component is interference-fitted with both the transmission component and the containing cavity, or, the traction component is snap-fitted with both the transmission component and the containing cavity.

In Example 1, the engaging end of the traction component is disposed with the recessed portion to avoid collision of the transmission component. In other embodiments, such as in Example 3, when the transmission component is buried deep enough, the engaging end of the traction component does not need to be disposed with the recessed portion.

In the above embodiments, the traction end of the traction component is a bolt head. In other embodiments, the traction end may be formed in a hook shape or other shapes for traction.

In the above embodiments, the transmission fitting position is the square protrusion and the internal hexagonal hole. In other embodiments, corresponding to the shapes of the engaging ends of different screwing tools, the transmission fitting position may be a hole with internal n corners or a protrusion with n corner, in which n is a natural number and 1<n. Furthermore, the transmission fitting position may also be an elliptical hole, an elliptical protrusion, a petal-shaped protrusion, or a petal-shaped hole, or any hole or protrusion with a non-circular cross section, so that the position occupying component may be driven to rotate after the screwing tool matches with the position occupying component. Even if the transmission fitting position is a gear, correspondingly, the engaging end of the screwing tool is a matching gear, and then the transmission component may be driven to rotate.

In the above embodiments, the containing cavity contains the transmission component and the position occupying component to avoid exposure of the components, the structure is builtin, the appearance is clean and aesthetical, and the comfort of the patient is improved. In addition, when the traction component is selected to be connected to the containing cavity, then the containing cavity is also helpful in avoiding interference between the traction function and the position occupying function. Specifically, compared with the conventional traction component fixedly connected to the main body portion, the traction component of the invention has a certain degree of mobility. Also, when the traction component performs traction, the traction component may undergo a slight position deviation or deflection due to the force of the ligation wire or rubber band. In the same way, the position occupying component also has a certain degree of mobility. When the position occupying component performs the position occupying function, a slight position deviation may occur due to the force of the archwire. For embodiments in which the traction component is linkagely connected to the position occupying component, the deviation may be transmitted. Certainly, the deviation and the indirect effect are not significant, but if the traction component is directly connected to the containing cavity, then the problem can be avoided from the root cause.

In other embodiments, the containing cavity is not limited to openings at both ends, and may have other shapes, or may have a higher degree of communication with the outside world. For non-self-locking orthodontic brackets, the surface of the working wing is inherently disposed with some grooves, which are spaces suitable for accommodating the position occupying component, and the space is the containing cavity, so that the transmission component and the position occupying component do not protrude significantly from the main body portion. The manner of exposure of the transmission component and the position occupying component can effectively reduce processing difficulty and production costs.

In each embodiment, the limited connection between the containing cavity and other components is achieved by disposing the annular groove and the flange for snap-fitting. Persons skilled in the art may make simple interchanges based on common knowledge.

In other embodiments, the trench divides the main body portion into two working wings, and the containing cavity penetrates the trench to be disposed on the two working wings.

In the above embodiments, the transmission component and the position occupying component are disposed at the first working wing. In other embodiments, both the transmission component and the position occupying component may also be disposed at the second working wing. The disposition of the transmission component and the position occupying component are not affected by whether the working wing is disposed with the cover body portion.

Furthermore, in other embodiments, the transmission component and the position occupying component may be disposed at different working wings. For example, the transmission component is disposed at the first working wing, and the position occupying component is disposed at the second working wing. The transmission component penetrates the bottom wall of the trench and is engaged with the position occupying component. The functional surface of the moving member faces the side wall of the trench close to the first working wing. The moving member moves close to or away from the first working wing to change the effective space of the trench.

In Example 1, the bottom side of the moving member abuts the bottom wall of the trench, so that the position occupying component cannot rotate. In Example 3, the sliding track matches and engages with the track path in the trench, so that the position occupying component cannot rotate. In other embodiments, a limiting structure is disposed on the moving member, and the limiting structure forms a limiting connection with the inner wall of the containing cavity or the side wall of the trench so that the position occupying component cannot rotate. Specifically, the moving member is disposed with a connecting rod, which is vertically connected to the connection surface of the moving member. Correspondingly, the side wall of the trench is disposed with a blind hole perpendicular to the surface of the side wall, and the connecting rod and the blind hole match each other. As the moving member moves in the trench, the connecting rod reaches deep into or slightly exits the blind hole, and the moving member cannot rotate.

In Example 1, the clamping arms of the position occupying component are disposed with internal threads to engage with the external thread of the transmission component. In other embodiments, the threads may also be interchanged to achieve the same technical effect.

In Example 1, the moving member of the position occupying component and the clamping arms are integrally formed. In other embodiments, the moving member and the clamping arms are not integrally formed, and the moving member and the clamping arms may be connected by welding, snap-fitting, screwing, interference-fitting, or other methods.

In Example 1, the clamping arm is a structure protruding from the moving member. Persons skilled in the art should know that the clamping arm is only a structure providing the receiving cavity and the internal thread to connect the threaded end of the transmission component. Therefore, based on the concept of this invention, the function of the clamping arm may be built into the moving member. For example, if the moving member is a thick enough plate, a connection surface thereof is partially recessed to form a receiving cavity, and the inner wall of the receiving cavity is provided with an internal thread, then the technical effect of the invention can also be achieved.

In Example 1, the moving member is disposed in the trench, and the clamping arm thereof reaches deep into the containing cavity. In Embodiment 2, the moving member is disposed in the containing cavity and the trench, and may completely exit from the trench into the containing cavity. In other embodiments, such as the situation that the function of the clamping arm is built into the moving member, the position occupying component may be disposed in the trench.

Furthermore, the moving member is disposed in the trench, and only moves in the trench; alternatively, the moving member is disposed in the containing cavity and the trench, and the moving member may completely exit the trench or completely enter the trench; alternatively, the moving member may completely exit the trench and only partially enter the trench; alternatively, the moving member may partially exit the trench and partially enter the trench; alternatively, the moving member may only partially exit the trench but may fully enter the trench.

Furthermore, for the design of the moving member that does not exit the trench at all, the moving member may extend to both sides to cover the side walls of the trench, as in Example 1, or the side walls of the trench may be recessed to form a groove to accommodate the moving member so that the moving member is flush with the side walls.

All the above embodiments adopt a design in which the main body portion and the cover body portion are combined into a smooth curved surface. This is a preferred embodiment that effectively reduces the foreign body sensation and discomfort of the user. In other embodiments, the main body portion may be a conventional square self-locking bracket. The connection between the cover body portion and the main body portion is not limited to a sliding connection, and other embodiments may be, for example, a rotating connection, and a flipping connection.

In other embodiments, the main body portion is a non-self-locking bracket, that is, the cover body portion for covering the trench is not disposed. In addition, in other embodiments of the invention, the bottom plate is not disposed, as long as the bottom surface of the main body portion has a structure adhering to the tooth surface.

The above embodiments are all orthodontic brackets. In other embodiments, the orthodontic appliance of the invention is a buccal tube. Some conventional buccal tubes are not designed with working wings, but the buccal tube is disposed with a trench, and the trench divides the main body portion of the buccal tube into two components. This invention is applicable as long as the scope involves orthodontic appliances with a trench and the trench divides the main body portion thereof into two components.

The invention is not limited to the embodiments. If various modifications or variations of the invention do not deviate from the spirit and scope of the invention, and if the modifications and variations fall within the claims and equivalent technical scope of the invention, then the invention is also intended to include the modifications and variations.

## Claims

1. An orthodontic appliance, **characterized by**: comprising a main body portion and a traction component, a transmission component, and a position occupying component disposed independently of each other, wherein the main body portion is disposed with a trench and a containing cavity openly formed and connected to the trench, the traction component is detachably connected to the containing cavity and/or the transmission component; the containing cavity accommodates the transmission component, the position occupying component is disposed in the trench or disposed in the containing cavity and the trench, and the transmission component is linkagedly connected to the position occupying component; the transmission component is provided with a transmission fitting position, the transmission fitting position is configured to linkagely connect a screwing tool, and the transmission component drives the position occupying component to at least partially enter or exit the trench or move in the trench along a trench width direction to change an effective space of the trench.

2. The orthodontic appliance as claimed in claim 1, **characterized by**: the traction component is detachably connected to the containing cavity through snap-fitting, screwing, or interference-fitting, and/or, the traction component is detachably connected to the transmission component through snap-fitting or interference-fitting.

3. The orthodontic appliance as claimed in claim 1, **characterized by**: the containing cavity is disposed with a limiting structure, so that the transmission component rotates in the containing cavity but does not move axially; the position occupying component is limited by the containing cavity and/or the trench and does not rotate.

4. The orthodontic appliance as claimed in claim 1, **characterized by**: the containing cavity penetrates through surfaces of the trench and the main body portion, and an opening of the containing cavity is disposed on a gingival surface of the main body portion.

5. The orthodontic appliance as claimed in claim 1, **characterized by**: the transmission component is a screw rod or a threaded bushing, and the screw rod or the threaded bushing is linkagedly connected to the position occupying component by screw connection.

6. The orthodontic appliance as claimed in claim 5, **characterized by**: the position occupying component comprises a moving member, the moving member is provided with an internal thread, and correspondingly, an end of the screw rod or an outer wall of the threaded bushing is provided with an external thread.

7. The orthodontic appliance as claimed in claim 1, **characterized by**: the transmission fitting position is a gear, a non-circular protrusion, or a non-circular hole.

8. The orthodontic bracket as claimed in claim 1, **characterized by**: the trench divides the main body portion into two working wings, the containing cavity is disposed on any one of the working wings or penetrates the trench to be disposed on the two working wings; the transmission component and the position occupying component are disposed on the same working wing, or the transmission component and the position occupying component are disposed on different working wings.

9. The orthodontic appliance as claimed in claim 1, **characterized by**: a bottom plate is further comprised, and the bottom plate is disposed on a bottom surface of the main body portion; a cover body portion is further comprised, and the cover body portion is disposed on a surface of the main body portion.

10. An orthodontic system, **characterized by**: comprising an archwire and at least one of the orthodontic appliance as claimed in any one of claims 1 to 9, wherein the archwire is accommodated in the trench of the orthodontic appliance.
